# EUROPÄISCHE PATENTANMELDUNG

(11) **EP 4 635 822 A1**
(43) Veröffentlichungstag der Anmeldung: **22.10.2025**
(21) Anmeldenummer: 25167270.5
(22) Anmeldetag: 31.03.2025
(51) Int. Cl.: B61D 15/00, B60F 1/04, E02F 9/02, E02F 9/08

(54) **ZWEIWEGEFAHRZEUG**

(30) Priorität: 09.04.2024 DE 102024109791
(71) Anmelder: Liebherr-Hydraulikbagger GmbH, 88457 Kirchdorf/Iller (DE)
(72) Erfinder: SCHICK, Marcel, 87700 Memmingen (DE); MÜLLER, Michael, 89165 Dietenheim (DE); GRABMAIER, Stefan, 86842 Türkheim (DE)
(74) Vertreter: Laufhütte, Dieter

(57) **Zusammenfassung**

Die Erfindung betrifft ein Zweiwegefahrzeug, insbesondere Zweiwegebagger, mit einem Unterwagen, der ein Radfahrwerk mit mindestens zwei Radachsen für die Straßenfahrt und ein Schienenfahrwerk mit vorderen und hinteren Schienenachsen für die Schienenfahrt umfasst. Der Unterwagen umfasst ein Mittelstück, an dem die Radachsen angeordnet sind, wobei die Schienenachsen relativ zum Mittelstück zwischen einer ersten Fahrstellung für die Straßenfahrt, einer zweiten Fahrstellung, in der das Zweiwegefahrzeug über die Schienenachsen auf Schienen geführt und über die Radachsen antreibbar ist, und einer dritten Fahrstellung, in der das Zweiwegefahrzeug nur über die Schienenachsen auf Schienen aufsitzt und antreibbar ist, bewegbar sind. Erfindungsgemäß umfasst das Zweiwegefahrzeug eine Abstützvorrichtung mit mindestens zwei am Mittelstück angeordneten Stützfüßen, die jeweils zwischen einer ersten Stützstellung, einer zweiten Stützstellung zum Abstützen des Zweiwegefahrzeugs in der zweiten Fahrstellung und einer dritten Stützstellung zum Abstützen des Zweiwegefahrzeugs in der dritten Fahrstellung bewegbar sind, wobei die Stützfüße ein Stützglied mit einem Fußstück, ein gelenkig mit Stützglied und Mittelstück gekoppeltes erstes Führungsglied und ein gelenkig mit Stützglied und Mittelstück gekoppeltes zweites Führungsglied umfassen, die so angeordnet und ausgebildet sind, dass ein definierter Punkt des Fußstücks in den zweiten und dritten Stützstellungen denselben seitlichen Abstand vom Mittelstück einnimmt.

## Beschreibung

Die vorliegende Erfindung betrifft ein Zweiwegefahrzeug, insbesondere einen Zweiwegebagger, gemäß dem Oberbegriff des Anspruchs 1, sowie eine Abstützvorrichtung für ein solches.

Zweiwegefahrzeuge sind aus dem Stand der Technik bekannt und zeichnen sich dadurch aus, dass sie multifunktional einsetzbar sind. Einerseits besitzen derartige Fahrzeuge ein Radfahrwerk und damit Straßentauglichkeit, sodass sie flexibel und unabhängig zum und am Einsatzort verfahren werden können. Andererseits weisen sie ein Schienenfahrwerk auf, das über Aktuatoren in eine Betriebsstellung gebracht und für die Schienenfahrt eingesetzt werden kann. Dadurch können Zweiwegefahrzeuge wie gewöhnliche Schienenfahrzeuge auf Gleisen verfahren, wobei der Antrieb während der Schienenfahrt üblicherweise über eine oder mehrere angetriebene Radachsen des Radfahrwerks oder über das Schienenfahrwerk erfolgt.

Derartige Zweiwegefahrzeuge können für unterschiedliche Arbeitsfunktionen konzipiert sein, beispielsweise als Schienenreinigungsfahrzeuge, Hebezeuge bzw. Krane, Greifer bzw. Materialumschlaggeräte, Hebebühnen, Dumper oder Bagger. Das Schienenfahrwerk kann dabei entweder als Anbaukonstruktion an ein bestehendes, straßentaugliches Fahrzeug montierbar oder in den Grundstahlbau des Unterwagens integriert sein.

Aus der DE 20 2006 017 727 U1 ist ein Zweiwegebagger bekannt, welcher einen gewöhnlichen Unterwagen mit Radfahrwerk besitzt, an dessen Stirnseiten (in Fahrtrichtung gesehen) Anbauten montiert sind, die mittels Hydraulikzylindern um horizontale Schwenkachsen schwenkbare Schienenachsen tragen. Durch Absenken bzw. Herunterschwenken der Schienenachsen mittels der Hydraulikzylinder wird die Betriebsstellung für die Schienenfahrt hergestellt, bei der der Zweiwegebagger über das Radfahrwerk angetrieben und über das Schienenfahrwerk auf den Schienen geführt wird. Durch Anheben bzw. Hochschwenken der Schienenachsen mittels der Hydraulikzylinder wird die Betriebsstellung für die Straßenfahrt hergestellt.

Bei derartigen Fahrzeugen ist es bekannt, über am Unterwagen angeordnete, verstellbare Stützfüße eine zusätzliche Abstützung für einen straßen- und/oder schienengebundenen Arbeitsbetrieb bereitzustellen. Üblicherweise besitzen die Stützfüße verschwenkbare Stützglieder, welche über Hydraulikzylinder nach unten ausgeschwenkt und in Bodenkontakt gebracht werden können.

Allerdings besitzt eine Reihe von Zweiwegefahrzeugen nicht nur eine Fahrstellung für die Schienenfahrt, bei der die Schienenachsen lediglich zur Führung des Fahrzeugs eingesetzt werden (d.h. die Schienenräder und die Straßenräder kontaktieren gemeinsam die Schienen), sondern zusätzlich eine weitere Fahrstellung für die Schienenfahrt, bei der die Straßenräder von den Schienen abgehoben sind und das Zweiwegefahrzeug nur über die Schienenräder auf den Schienen aufsitzt und angetrieben wird. Hierbei ergeben sich jedoch Herausforderungen bei der Konstruktion einer Abstützvorrichtung, welche für beide schienengebundene Fahrstellungen, in denen das Mittelstück unterschiedliche Abstände zum Boden einnimmt, eine Abstützung bereitstellt, da übliche Schwenkkonstruktionen einerseits beim Bewegen in die unterschiedlichen Stützstellungen einen erheblichen Platz seitlich des Unterwagens benötigen und andererseits eine Kollision der Stützfüße mit den Schienen droht.

Der vorliegenden Erfindung liegt daher die Aufgabe zugrunde, ein gattungsgemäßes Zweiwegefahrzeug mit zwei Fahrstellungen für die Schienenfahrt bereitzustellen, welches eine Abstützung in beiden Fahrstellungen erlaubt. Die Abstützvorrichtung soll hierbei einen simplen Aufbau und gleichzeitig einen möglichst geringen seitlichen Platzbedarf aufweisen.

Erfindungsgemäß wird diese Aufgabe durch die Kombination der Merkmale des Anspruchs 1 gelöst. Vorteilhafte Ausführungsformen der Erfindung ergeben sich aus den Unteransprüchen und der nachfolgenden Beschreibung.

Demnach wird ein Zweiwegefahrzeug vorgeschlagen, bei dem es sich insbesondere um einen Zweiwegebagger handeln kann. Das Zweiwegefahrzeug besitzt einen Unterwagen, welcher ein Radfahrwerk mit mindestens zwei Radachsen für die Straßenfahrt und ein Schienenfahrwerk mit einer vorderen und einer hinteren Schienenachse für die Schienenfahrt umfasst. Die Radachsen besitzen für die Straßenfahrt ausgebildete Räder bzw. Straßenräder (im Folgenden nur als Räder bezeichnet), während die Schienenachsen für die Schienenfahrt ausgebildete Schienenräder besitzen. Der Unterwagen umfasst weiterhin ein Mittelstück, an welchem die Radachsen angeordnet sind. Mindestens eine der Radachsen ist lenkbar, um das Zweiwegefahrzeug bei der Straßenfahrt (= erste Fahrstellung) lenken zu können. Ferner ist mindestens eine der Radachsen aktiv antreibbar, sodass das Zweiwegefahrzeug bei der Straßenfahrt über das Radfahrwerk angetrieben und gelenkt werden kann. Das Mittelstück kann eine Stahlbaukonstruktion darstellen.

Das Zweiwegefahrzeug besitzt zwei weitere Fahrstellungen für die Schienenfahrt. In einer zweiten Fahrstellung sind die Schienenachsen so weit abgesenkt, dass sowohl die Schienenräder als auch die Räder der Radachsen auf den Schienen aufsitzen. In dieser Fahrstellung wird das Zweiwegefahrzeug über die Schienenräder auf den Schienen geführt und über die Radachsen angetrieben. In einer dritten Fahrstellung sitzt das Zweiwegefahrzeug nur über die Schienenachsen bzw. Schienenräder auf den Schienen auf, während die Räder der Radachsen von den Schienen abgehoben sind. Hierbei wird das Zweiwegefahrzeug über wenigstens eine der Schienenachsen angetrieben. Das Zweiwegefahrzeug umfasst vorzugsweise Aktuatoren, mittels welchen die Schienenachsen relativ zum Mittelstück und somit relativ zu den Radachsen zwischen den genannten Fahrstellungen bewegt, insbesondere verschwenkt werden können.

Erfindungsgemäß umfasst das Zweiwegefahrzeug eine Abstützvorrichtung mit mindestens zwei am Mittelstück angeordneten Stützfüßen, welche jeweils zwischen mindestens drei Stützstellungen bewegbar sind. Eine erste Stützstellung kann eine Parkstellung darstellen, in welcher die Stützfüße eingeklappt sind und diese somit bei einer Straßenfahrt keinen Kontakt zum Boden aufweisen. Alternativ kann in einer ersten Stützstellung eine Abstützung des Zweiwegefahrzeugs in der ersten Fahrstellung erfolgen. In letzterem Fall kann die Parkstellung eine vierte Stützstellung darstellen, d.h. das Zweiwegefahrzeug kann mindestens vier Stützstellungen besitzen.

In einer zweiten Stützstellung erfolgt eine Abstützung des Zweiwegefahrzeugs in der zweiten Fahrstellung, d.h. wenn das Zweiwegefahrzeug über die Schienenräder und über die Straßenräder auf den Schienen aufsitzt. In einer dritten Stützstellung erfolgt eine Abstützung des Zweiwegefahrzeugs in der dritten Fahrstellung, d.h. wenn das Zweiwegefahrzeug über nur die Schienenräder auf den Schienen aufsitzt. Hierbei weist das Mittelstück einen größeren Abstand zum Boden auf, sodass die Stützfüße weiter nach unten ausgefahren bzw. ausgeklappt sind als in der zweiten Stützstellung.

Vorliegend beziehen sich die Angaben "unten" und "oben" auf den Fall, dass sich das Zweiwegefahrzeug auf horizontal verlaufenden Schienen oder einem horizontalen, ebenen Untergrund befindet. Hierbei befindet sich der Boden bzw. befinden sich die Schienen unterhalb des Mittelstücks.

Die Stützfüße umfassen erfindungsgemäß jeweils ein Stützglied mit einem Fußstück, ein gelenkig mit dem Stützglied und dem Mittelstück gekoppeltes erstes Führungsglied und ein gelenkig mit dem Stützglied und dem Mittelstück gekoppeltes zweites Führungsglied, welche so angeordnet und ausgebildet sind, dass ein definierter Punkt des Fußstücks in den zweiten und dritten Stützstellungen, vorzugsweise in den ersten, zweiten und dritten Stützstellungen, denselben seitlichen Abstand vom Mittelstück einnimmt.

Dadurch, dass die ersten und zweiten Führungsglieder zwischen Mittelstück und Stützglied verbaut und mit diesen gelenkig gekoppelt sind, lassen sich die beweglichen Teile der Stützfüße in ihrer Anordnung und Ausgestaltung auf die abzustützenden Fahrstellungen derart optimieren, dass die Abstützweite für diese Fahrstellungen konstant bleibt. Dadurch ist es möglich, das Zweiwegefahrzeug nicht nur in der ersten Fahrstellung, sondern auch in der dritten Fahrstellung über die Abstützvorrichtung abzustützen, ohne dass die Stützfüße dabei mit den Schienen kollidieren. Es erfolgt somit eine Abstützung mit gleicher Abstützweite in wenigstens zwei unterschiedlichen Abstützhöhen, vorzugsweise in drei unterschiedlichen Abstützhöhen (nämlich in den drei genannten Stützstellungen).

Die genauen Lagen und Formen der ersten und zweiten Führungsglieder und des Stützgliedes können mittels Zweilagensynthese, vorzugsweise mittels Dreilagensynthese (zum Erreichen gleicher Abstützweiten in den ersten, zweiten und dritten Stützstellungen) ermittelt werden.

Die ersten und zweiten Führungsglieder können Rahmenstrukturen mit zwei über die jeweiligen Gelenke verbundenen Seitenprofilen darstellen, wobei das Stützglied eine zwischen den Seitenprofilen der ersten und zweiten Führungsglieder angeordnete Kastenkonstruktion darstellen kann.

In einer möglichen Ausführungsform ist vorgesehen, dass das Fußstück gelenkig mit dem Stützglied verbunden ist. Die Drehachse des Gelenks des Fußstücks ist vorzugsweise parallel zu den Gelenkachsen der ersten und zweiten Führungsglieder und des Stützglieds ausgerichtet. Vorzugsweise bildet das Drehgelenk zwischen Fußstück und Stützfuß den genannten definierten Punkt (in Fahrtrichtung, d.h. entlang der Längsachse des Unterwagens gesehen) des Fußstücks. Allerdings kann ein beliebiger anderer Punkt des Fußstücks den definierten Punkt bilden, je nachdem, wie das Fußstück in den jeweiligen Stützstellungen ausgerichtet ist.

In einer weiteren möglichen Ausführungsform ist vorgesehen, dass das erste Führungsglied ein Dreigelenkglied bildet (d.h. drei Gelenke besitzt) und das zweite Führungsglied ein Zweigelenkglied bildet (d.h. zwei Gelenke besitzt). Sämtliche Gelenkachsen sind vorzugsweise parallel zueinander ausgerichtet, sodass der Stützarm vorzugsweise ein ebenes Führungsgetriebe bildet.

Das erste Führungsglied besitzt vorzugsweise in Fahrtrichtung gesehen eine im Wesentlichen dreieckige Form. Die Form des ersten Führungsglieds kann durch die Lage der die Ecken eines Dreiecks bildenden Gelenke vorgegeben sein. Die Einleitung der Kraft zur Führung des Stützglieds kann über eines der Gelenke des ersten Führungsglieds erfolgen.

In einer weiteren möglichen Ausführungsform ist vorgesehen, dass das erste Führungsglied unterhalb des zweiten Führungsglieds angeordnet ist (d.h. zwischen Boden und zweitem Führungsglied). Alternativ oder zusätzlich kann vorgesehen sein, dass das erste Führungsglied unabhängig von der Stützstellung im Wesentlichen parallel zum zweiten Führungsglied verläuft. Durch geeignete Wahl der Längen der ersten und zweiten Führungsglieder kann so erreicht werden, dass das Stützglied beim Bewegen zwischen den unterschiedlichen Stützstellungen nicht oder nur geringfügig gegenüber der Vertikalen verkippt, sodass die Stützarme nur einen geringen zeitlichen Platzbedarf aufweisen. Dadurch kann das Ein- oder Ausfahren der Stützfüße auch in Bereichen mit beengten Platzverhältnissen wie beispielsweise im Bereich eines Bahnsteigs erfolgen.

In einer weiteren möglichen Ausführungsform ist vorgesehen, dass jeder Stützfuß einen Aktuator umfasst, mittels welchem der Stützfuß aktiv zwischen den ersten, zweiten und dritten Stützstellungen bewegbar ist. Dabei sind die Stützfüße vorzugsweise über die Aktuatoren unabhängig voneinander bewegbar, d.h. es erfolgt kein gemeinsames Bewegen der Stützarme über einen gemeinsamen Aktuator oder über einen Kopplungsmechanismus. Die Aktuatoren sind insbesondere als Hydraulikzylinder ausgebildet. Durch Ein- und Ausfahren der Kolbenstangen werden die Stützarme in die jeweiligen Stützstellungen bewegt. Vorzugsweise wird jeder Stützarm nur über einen einzigen Aktuator bewegt.

In einer weiteren möglichen Ausführungsform ist vorgesehen, dass der Aktuator gelenkig mit dem Mittelstück und mit dem ersten Führungsglied verbunden ist. Der Aktuator leitet somit die Kraft zum Bewegen des Stützglieds über das entsprechende Gelenk in das erste Führungsglied ein. Vorzugsweise besitzt der Aktuator keine direkte Verbindung zum zweiten Führungsglied und zum Stützglied, sondern ist nur mit dem ersten Führungsglied gekoppelt. Das erste Führungsglied kann einen verbreiterten bzw. "bauchigen" Abschnitt (in Fahrtrichtung gesehen) aufweisen, an dem sich das Gelenk befindet, mit welchem der Aktuator verbunden ist.

In einer weiteren möglichen Ausführungsform ist vorgesehen, dass jeder Stützfuß einen Halterahmen umfasst, welcher mit dem Mittelstück verbunden ist, insbesondere starr mit dem Mittelstück verbunden ist. Die ersten und zweiten Führungsglieder sind in diesem Fall gelenkig mit dem Halterahmen und somit nur indirekt mit dem Mittelstück gekoppelt. Der Halterahmen umfasst die entsprechenden Gelenkstellen zur gelenkigen Verbindung mit den ersten und zweiten Führungsgliedern sowie vorzugsweise mit dem oben genannten Aktuator. Die Halterahmen sind vorzugsweise seitlich am Mittelstück befestigt oder ausgebildet.

In einer weiteren möglichen Ausführungsform ist vorgesehen, dass der Aktuator als Hydraulikzylinder ausgebildet und gelenkig mit dem Halterahmen verbunden ist. Der Hydraulikzinder ist vorzugsweise so am Stützfuß angeordnet, dass eine gedachte Verbindungsgerade, die die Gelenkstellen der ersten und zweiten Führungsglieder am Halterahmen miteinander verbindet, unabhängig von der Stützstellung einen Winkel von weniger als 45°, insbesondere einen Winkel von weniger als 30° zur Längsachse (d.h. zur Ein- und Ausfahrrichtung der Kolbenstange) des Hydraulikzylinders einnimmt. Der Hydraulikzylinder verläuft vorzugsweise in Fahrtrichtung gesehen von oben nach unten schräg zur Mittelebene des Unterwagens. Dadurch ergibt sich eine gute Krafteinleitung und ein platzsparender Aufbau.

In einer weiteren möglichen Ausführungsform ist vorgesehen, dass die ersten und zweiten Führungsglieder und das Stützglied so ausgebildet sind, dass der definierte Punkt des Fußstücks in den zweiten und dritten Stützstellungen, insbesondere in den ersten, zweiten und dritten Stützstellungen, auf einer gemeinsamen vertikalen Linie liegt. In den Stützfußstellungen zwischen den definierten Stützstellungen kann der definierte Punkt seitlich der genannten vertikalen Linie liegen. Bei der ersten Stützstellung kann es sich um die genannte Parkstellung oder um eine Stellung zur Abstützung des Zweiwegefahrzeugs in der ersten Fahrstellung (auf der Straße bzw. auf dem Boden) handeln. Optional können sowohl die Parkstellung als auch die Abstützstellung für die erste Fahrstellung als Stützstellungen realisiert sein. In letzterem Fall kann vorgesehen sein, dass in allen vier Stützstellungen der definierte Punkt des Fußstücks auf einer gemeinsamen vertikalen Linie liegt. Alternativ kann auch nur in den drei Stützstellungen, die nicht der Parkstellung entsprechen, der definierte Punkt des Fußstücks auf einer gemeinsamen vertikalen Linie liegen.

In einer weiteren möglichen Ausführungsform ist vorgesehen, dass die ersten und zweiten Führungsglieder und das Stützglied so ausgebildet sind, dass der definierte Punkt des Fußstücks bei einer Bewegung des Stützfußes von der ersten in die dritte Stützstellung in Fahrtrichtung gesehen eine S-förmige Bewegungsbahn beschreibt. Die Bewegungsbahn schneidet insbesondere an den jeweiligen Stützstellungen die zuvor genannte vertikale Linie. Damit der Stützfuß beim Bewegen zwischen den unterschiedlichen Stützstellungen nur einen geringen seitlichen Platzbedarf aufweist, verläuft die Bewegungsbahn vorzugsweise innerhalb der gedachten Außenkontur des in der dritten Stützstellung befindlichen Stützglieds. Die Bewegungsbahn verläuft vorzugsweise in einer Ebene parallel zur Bewegungsebene der Führungs- und Stützglieder.

In einer weiteren möglichen Ausführungsform ist vorgesehen, dass jeder Stützfuß ein drittes Führungsglied umfasst, welches das Fußstück gelenkig mit dem Mittelstück oder dem zuvor beschriebenen Halterahmen verbindet und das Fußstück in einer Parkstellung des Stützfußes, in welcher das Fußstück keinen Kontakt zum Boden hat, in eine verschwenkte bzw. eingeklappte Einklappstellung drückt. Dabei kann die Unterseite des Fußstücks zur Mittelebene des Unterwagens, d.h. nach innen weisen. Die Parkstellung kann die genannte erste Stützstellung sein. Alternativ kann das Zweiwegefahrzeug drei Stützstellungen und zusätzlich die genannte Parkstellung besitzen, wobei in der ersten Stützstellung eine Abstützung des Zweiwegefahrzeugs in der ersten Fahrstellung erfolgt. Das dritte Führungsglied dient vorzugsweise ausschließlich dem automatischen Einklappen des Fußstücks zum Einnehmen der Parkstellung.

Das dritte Führungsglied kann als Teleskopstange ausgebildet sein, welche vorzugsweise in der Parkstellung vollständig eingefahren ist und das Fußstück verschwenkt. Jeder Stützfuß kann ein einziges drittes Führungsglied oder zwei parallel zueinander und insbesondere auf gegenüberliegenden Seiten des Stützglieds angeordnete dritte Führungsglieder umfassen.

In einer weiteren möglichen Ausführungsform ist vorgesehen, dass die Abstützvorrichtung genau zwei Stützfüße umfasst, welche vorzugsweise mittig am Mittelstück zwischen zwei Radachsen angeordnet sind. Die Abstützvorrichtung bildet hierbei eine Zwei-Punkt-Abstützung des Zweiwegefahrzeugs. Dadurch ergibt sich eine kürzere Gesamtlänge des Unterwagens und eine Reduktion des Unterwagengewichts im Vergleich zu einer Vier-Punkt-Abstützung.

Alternativ kann die Abstützvorrichtung eine Vier-Punkt-Abstützung bilden und hierzu vier Stützfüße umfassen, welche vorzugsweise paarweise seitlich an stirnseitigen Endabschnitten des Mittelstücks (d.h. vorne und hinten am Unterwagen) jeweils zwischen einer Radachse und einer Schienenachse angeordnet sind.

In einer weiteren möglichen Ausführungsform ist vorgesehen, dass das Schienenfahrwerk ein vorderes und ein hinteres Endstück umfasst, welche jeweils eine der Schienenachsen tragen und um eine parallel zu einer Längsachse des Unterwagens verlaufende Pendelachse drehbar am Mittelstück gelagert sind, insbesondere an den Stirnseiten des Mittelstücks (in Fahrtrichtung gesehen), um Unebenheiten bei der Schienenfahrt durch eine Pendelbewegung der Schienenachse auszugleichen, wobei die Pendelachsen der Endstücke vorzugsweise unabhängig von der Fahrstellung parallel und insbesondere koaxial zueinander verlaufen. Dadurch, dass beide Schienenachsen drehbar mit dem Mittelstück verbunden sind, ergibt sich eine verbesserte Ausgleichsmöglichkeit bei Schienenunebenheiten, da beide Schienenachsen unabhängig voneinander Pendelbewegungen ausführen können. Ein weiterer Vorteil ist ein gleichbleibendes Fahrwerksverhalten beim Arbeiten über die vordere oder die hintere Schienenachse. Zudem werden höhere zulässige Traglasten erreicht, da die Schienenräder bei einer Schwerpunktsverlagerung erst später von den Schienen abheben.

In einer weiteren möglichen Ausführungsform ist vorgesehen, dass jedes Endstück ein erstes und ein zweites Rahmenteil umfasst, wobei die Schienenachse jeweils am ersten Rahmenteil gelagert ist und das zweite Rahmenteil jeweils um die genannte Pendelachse drehbar mit dem Mittelstück verbunden ist. Die Rahmenteile sind dabei beweglich miteinander verbunden, wobei die verschiedenen Fahrstellungen des Zweiwegefahrzeugs dadurch erreicht werden, dass die ersten Rahmenteile mit den daran gelagerten Schienenachsen relativ zu den zweiten Rahmenteilen und damit zum Mittelstück bewegt werden. Vorzugsweise sind die ersten Rahmenteile schwenkbar, insbesondere um horizontal und parallel zu den Schienenachsen verlaufende Schwenkachsen schwenkbar, mit den zweiten Rahmenteilen verbunden. Die zweite Fahrstellung wird dann durch Verschwenken der ersten Rahmenteile relativ zu den zweiten Rahmenteilen von einer ersten Schwenkposition in eine zweite Schwenkposition erreicht, wobei die dritte Fahrstellung durch weiteres Verschwenken der ersten Rahmenteile erreicht wird.

Vorzugsweise umfassen die Endstücke als hydraulische Schwenkzylinder ausgebildete Aktuatoren, um die ersten Rahmenteile zu bewegen bzw. zu verschwenken. Die Aktuatoren zum Bewegen der Schienenachsen und die Schwenkzylinder können über einen gemeinsamen Hydraulikkreis oder über separate Hydraulikkreise des Zweiwegefahrzeugs steuerbar sein.

Die vorliegende Erfindung betrifft ferner eine Abstützvorrichtung für ein erfindungsgemäßes Zweiwegefahrzeug, welche mindestens zwei Stützfüße gemäß einer oder mehreren der zuvor beschriebenen Ausführungsformen umfasst. Die Abstützvorrichtung umfasst vorzugsweise die zuvor beschriebenen Halterahmen, wobei diese als Anbaukonsolen ausgestaltet sind und entsprechende Verbindungselemente umfassen, um sie mit dem bestehenden Unterwagen eines erfindungsgemäßen Zweiwegefahrzeugs verbinden zu können.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische perspektivische Darstellung des Unterwagens des erfindungsgemäßen Zweiwegefahrzeugs gemäß einem Ausführungsbeispiel;
- Figuren 2a-b:: schematische Seitenansichten des Unterwagens eines Ausführungsbeispiels des erfindungsgemäßen Zweiwegefahrzeugs in den zweiten und dritten Fahrstellungen;
- Figur 3a-c:: Frontansichten eines Ausführungsbeispiels eines Stützfußes am Mittelestücks des erfindungsgemäßen Zweiwegefahrzeugs in drei unterschiedlichen Stellungen;
- Figur 4:: eine Überlagerung dreier Stützstellungen des Stützfußes; und
- Figur 5:: eine perspektivische Ansicht des Stützbeins in der zweiten Stützstellung.

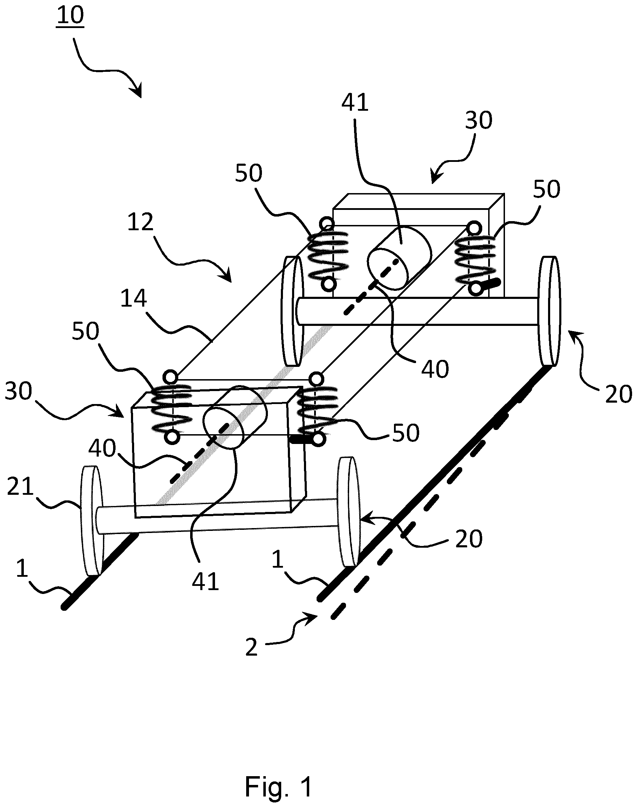

Die Figur 1 zeigt den Unterwagen 12 eines Ausführungsbeispiels des erfindungsgemäßen Zweiwegefahrzeugs 10, wobei der Aufbau des Unterwagens 12 nur grob schematisch dargestellt ist. Dabei kann es sich um den Unterwagen 12 eines Zweiwegebaggers handeln. Der Unterwagen 12 umfasst ein Mittelstück 14, welches ein hier nicht dargestelltes Radfahrwerk mit mindestens zwei Radachsen trägt. An den in Fahrtrichtung gesehen vorderen und hinteren Stirnseiten des Mittelstücks 14 können sich zwei Endstücke 30 befinden, welche jeweils eine Schienenachse 20 tragen. Die beiden Endstücke 30 mit den Schienenachsen 20 können ein Schienenfahrwerk des Zweiwegefahrzeugs 10 bilden.

In der gezeigten Ansicht befindet sich das Zweiwegefahrzeug 10 auf Schienen 1, welche als zwei durchgezogene Linien dargestellt sind. Dabei ist eine der Schienen 1 im Vergleich zu deren nominalen Lage (gezeigt als gestrichelte Linie) und somit im Vergleich zur anderen Schiene 1 erhöht. Aus dieser Verwindung 2 ergibt sich ein Höhenunterschied zwischen den beiden Schienen 1, der bei einer rotationsstarren Anbindung der Schienenachsen 20 bzw. Endstücke 30 an das Mittelstück 14 dazu führen würde, dass eines der Schienenräder 21 von der Schiene 1 abhebt.

Um derartige Schienenverwindungen und -unebenheiten ausgleichen zu können, können die Endstücke 30 optional über Drehlager 41 drehbar mit dem Mittelstück 14 verbunden sein. Die Drehlager 41 können so angeordnet sein, dass die durch sie definierten Drehachsen 40 koaxial zueinander innerhalb der Mittelebene des Unterwagens 12 liegen. Die Drehachsen 40 bilden dann Momentandrehpole, um die die vorderen und hinteren Schienenachsen 20 unabhängig voneinander pendeln können, sodass auch beim Vorliegen eines Höhenunterschieds alle Schienenräder 21 auf den Schienen 1 aufliegen. Diese Drehachsen 40 bilden daher Pendelachsen 40 für die Schienenachsen 20.

Das Zweiwegefahrzeug 10 kann optional mehrere Lageranordnungen 50 umfassen, die jeweils paarweise zwischen den Endstücken 30 und dem Mittelstück 14 angeordnet sind. Im einfachsten Fall können diese, wie in Fig. 1 dargestellt, als Federelemente ausgebildet sein, um die Pendelbewegungen der Schienenachsen 20 gegenüber dem Mittelstück 14 zu federn bzw. zu dämpfen. Alternativ können die Lageranordnungen 50 zwei Betriebsmodi aufweisen, zwischen denen sie aktiv umschaltbar sind. In einem Dämpfungsmodus, welcher insbesondere für die Schienenfahrt eingesetzt wird, kann jede der Lageranordnungen 50 eine niedrigere Steifigkeit bereitstellen als in einem Sperrmodus, welcher insbesondere in einem schienengebundenen Arbeitsbetrieb des Zweiwegefahrzeugs 10 zum Einsatz kommt. Die Lageranordnungen 50 können jeweils eine Reihenschaltung eines Elastomerelements zum Bereitstellen der höheren Steifigkeit und eines Hydraulikzylinders umfassen, wobei letzterer durch eine Verschiebung eines als verstellbarer mechanischer Anschlag fungierenden Kolbens die niedrigere Steifigkeit bereitstellt und optional durch ein Sperrventil "deaktivierbar", d.h. in seiner Beweglichkeit sperrbar ist.

Das Zweiwegefahrzeug 10 besitzt drei unterschiedliche Fahrstellungen. In einer ersten Fahrstellung für die Straßenfahrt sind die Schienenachsen 20 angehoben und der Unterwagen 12 sitzt nur über die Räder 16 der Radachsen auf dem Boden auf und kann über diese verfahren werden (z.B. auf einer öffentlichen Straße oder auf unebenem Gelände). In einer zweiten Fahrstellung für die Schienenfahrt sind die Schienenachsen 20 über einen noch zu beschreibenden Betätigungsmechanismus so weit abgesenkt, dass die Räder 16 der Radachsen auf den Schienen 1 aufsitzen und gleichzeitig die Schienenräder 21 der Schienenachsen 20 auf den Schienen 1 aufsitzen, sodass das Zweiwegefahrzeug 10 über die Radachsen angetrieben und über die Schienenachsen 20 auf den Schienen 1 geführt wird. In einer dritten Fahrstellung für die Schienenfahrt sind die Schienenachsen 20 über den Betätigungsmechanismus weiter abgesenkt, sodass das Zweiwegefahrzeug 10 nur noch über die Schienenräder 21 auf den Schienen 1 aufsitzt und die Räder 16 der Radachsen in der Luft hängen. Der Antrieb erfolgt dann über einen Schienenachsenantriebsmechanismus einer oder mehrerer Schienenachsen 20.

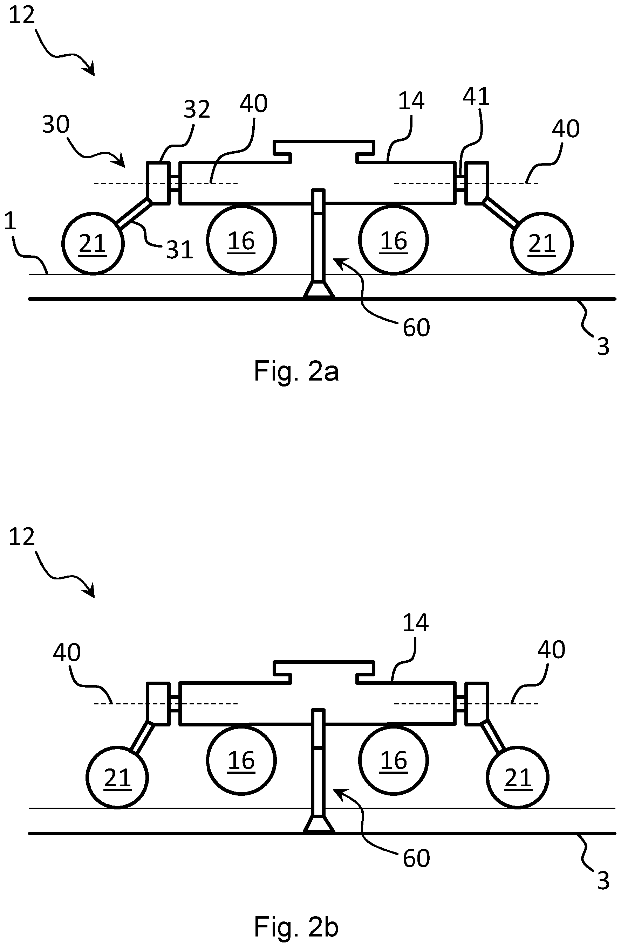

Die Figuren 2a und 2b zeigen den Unterwagen 12 eines Ausführungsbeispiels des erfindungsgemäßen Zweiwegefahrzeugs 10 in einer schematischen Seitenansicht. Hierbei sind nun die Räder 16 der Radachsen eingezeichnet, von denen mindestens eine Radachse über einen nicht dargestellten Antriebsstrang des Mittelstücks 14 antreibbar ist. Bei dem gezeigten Ausführungsbeispiel besitzt der Unterwagen ein Schienenfahrwerk mit zwei drehbar um Pendelachsen 40 gelagerte Endstücke 30. Jedes der Endstücke 30 kann dabei ein erstes Rahmenteil 31, an welchem die jeweilige Schienenachse 20 gelagert ist, sowie ein über ein Drehlager 41 um die Pendelachse 40 drehbar mit dem Mittelstück 14 gekoppeltes zweites Rahmenteil 32 umfassen. **In** den Figuren 2a-b sind die Schienenräder 21 der Schienenachsen 20 zu erkennen. Ferner ist in den Figuren 2a-b schematisch angedeutet, dass das Mittelstück 14 einen Drehkranz zur drehbaren Lagerung eines Oberwagens besitzen kann.

Die ersten und zweiten Rahmenteile 31, 32 sind vorzugsweise in Bezug auf die jeweilige Pendelachse 40 rotationsstarr miteinander verbunden (dies schließt nicht aus, dass eine Relativdrehung um eine nicht parallel zur Pendelachse 40 verlaufende Schwenkachse erfolgen kann), sodass eine Drehung eines zweiten Rahmenteils 32 um die Pendelachse 40 zu einer Pendelbewegung der zugeordneten Schienenachse 20 führt.

Bei dem in den Figuren 2a-b gezeigten Ausführungsbeispiel sind die ersten Rahmenteile 31 um horizontale und parallel zu den Schienenachsen 20 verlaufende Schwenkachsen schwenkbar mit den zweiten Rahmenteilen 32 gekoppelt, wobei die Endstücke 30 nicht dargestellte Aktuatoren umfassen, die zwischen den ersten und zweiten Rahmenteilen 31, 32 verbaut sind. Dabei kann es sich insbesondere um hydraulische Schwenkzylinder handeln, die gelenkig mit den ersten und mit den zweiten Rahmenteilen 31, 32 gekoppelt sind. Die Schienenachsen 20 werden dann durch Ein- und Ausfahren der Schwenkzylinder um die horizontalen Schwenkachsen verschwenkt, um die unterschiedlichen Fahrstellungen einzunehmen.

Die Figur 2a zeigt die zweite Fahrstellung, bei der sowohl die Räder 16 als auch die Schienenräder 21 auf den Schienen 1 aufliegen. Die ersten Rahmenteile 31 sind hierfür in eine entsprechende Position nach unten geschwenkt. Die Figur 2b zeigt die dritte Fahrstellung, bei der die ersten Rahmenteile 31 weiter abgesenkt worden sind, sodass die Räder 16 keinen Kontakt zu den Schienen 1 besitzen und der Unterwagen 12 nur über die Schienenräder 21 aufsitzt.

Die Ausgestaltung mit den drehbaren Endstücken 30 ist jedoch nicht zwingend vorzusehen. Alternativ könnten die Schienenachsen 20 beispielsweise direkt schwenkbar mit dem Mittelstück 14 verbunden sein. Die folgenden Ausführungen zur Abstützvorrichtung gelten daher unabhängig von der genauen Ausgestaltung und Anbindung des Schienenfahrwerks.

Das Zweiwegefahrzeug 10 umfasst eine Abstützvorrichtung, um in einem Arbeitsbetrieb eine stabile Abstützung mit einer ausreichend großen Stützbasis bereitzustellen. Gemäß dem Ausführungsbeispiel der Figuren 2a-b umfasst die Abstützvorrichtung zwei Stützfüße 60 (Zwei-Punkt-Abstützung), welche seitlich zwischen den Radachsen am Mittelstück 14 angeordnet sind. Alternativ könnten mehr als zwei Stützfüße 60 vorgesehen sein, beispielsweise vier Stützfüße 60 (Vier-Punkt-Abstützung), die im Bereich der stirnseitigen Endabschnitte des Mittelstücks 14, die den Endstücken 30 benachbart sein können, zwischen den Radachsen und den Schienenachsen 20 angeordnet sind.

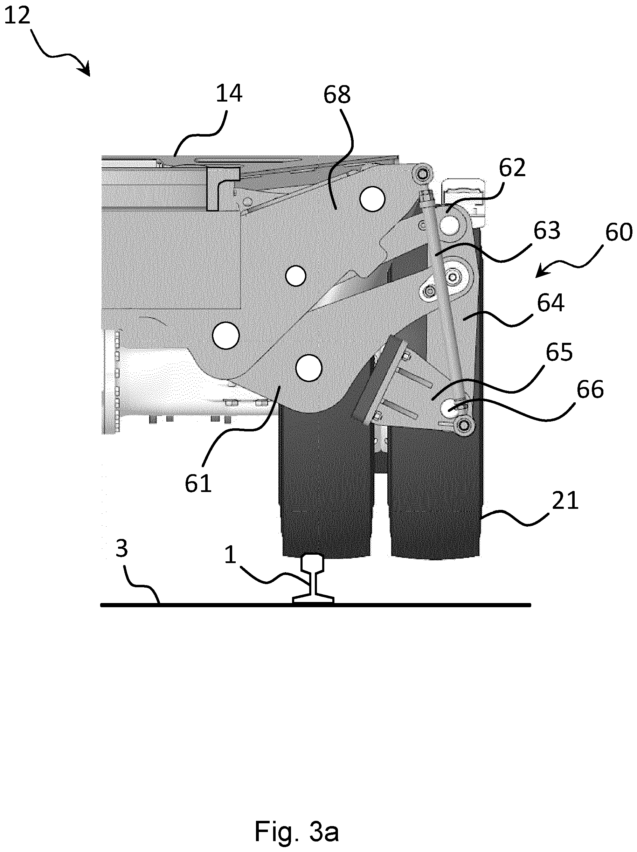

Wie in den Figuren 2a-b zu erkennen ist, kann das Zweiwegefahrzeug 10 in jeder der schienengebundenen Fahrstellungen über die Stützfüße 60 abgestützt werden, wobei sich diese am Boden 3 seitlich neben den Schienen 1 abstützen. Damit die Stützfüße 60 sowohl in der zweiten Fahrstellung (Fig. 2a) als auch in der dritten Fahrstellung (Fig. 2b) eine stabile Abstützung bereitstellen, ohne in der dritten Fahrstellung mit den Schienen 1 zu kollidieren und ohne zu viel Platz seitlich des Mittelstücks 14 bei der Aus- und Einfahrbewegung einzunehmen, besitzen die Stützfüße 60 einen speziellen Aufbau, welcher nachfolgend anhand des in den Figuren 3a-c gezeigten Ausführungsbeispiels erläutert wird.

In den Figuren 3a-c ist ein Stützfuß eines Ausführungsbeispiels der erfindungsgemäßen Abstützvorrichtung am Mittelstück 14 in einer Frontansicht (d.h. entlang der Fahrtrichtung gesehen) in unterschiedlichen Stützstellungen dargestellt, wobei nur eine Seite des Mittelstücks 14 und somit nur einer der Stützfüße 60 gezeigt ist.

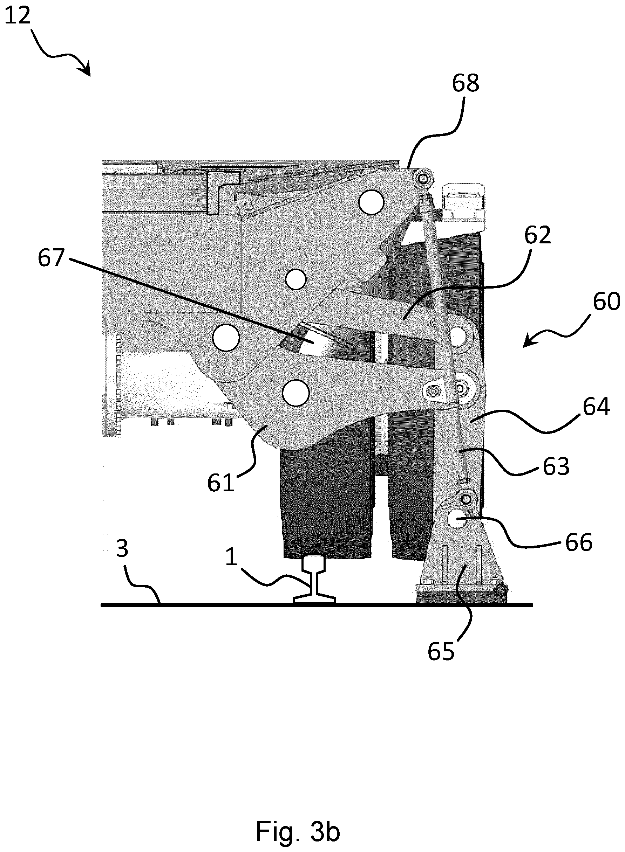

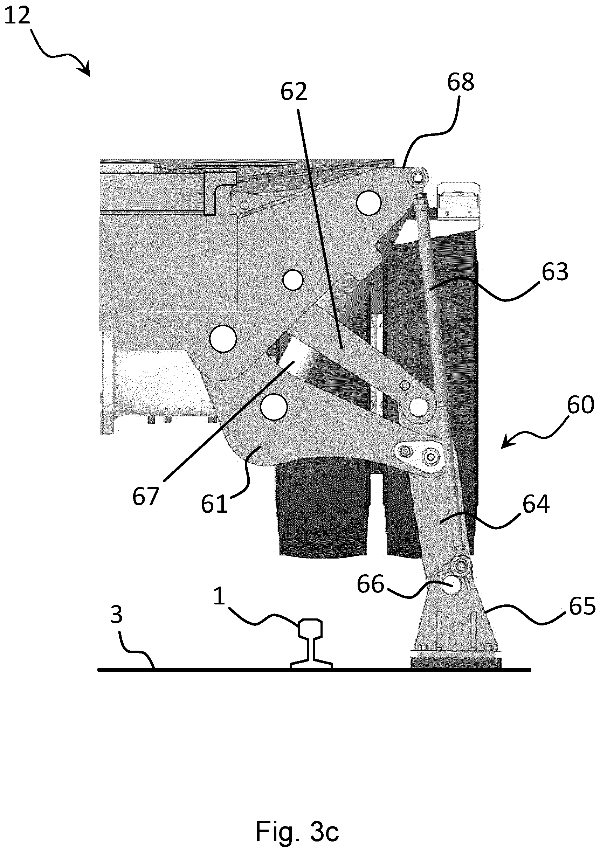

In der Figur 3a befindet sich der Stützfuß 60 in einer eingeklappten Parkstellung, in der kein Kontakt mit dem Boden 3 besteht. In der Figur 3b ist der Stützfuß 60 ausgefahren und befindet sich in einer zweiten Stützstellung, in der das in der zweiten Fahrstellung befindliche Zweiwegefahrzeug 10 am Boden 3 abgestützt wird. In der Figur 3c ist der Stützfuß 60 noch weiter ausgefahren und befindet sich in einer dritten Stützstellung, in der das in der dritten Fahrstellung befindliche Zweiwegefahrzeug 10 am Boden 3 abgestützt wird.

Der Stützfuß 60 umfasst einen seitlich am Mittelstück 14 montierten Halterahmen 68. An diesen sind ein erstes Führungsglied 61 und ein zweites Führungsglied 62 um insbesondere horizontale und parallel zur Längsachse des Unterwagens verlaufende Drehachsen angelenkt. Die Längsachse des Unterwagens verläuft bei einer Geradeausfahrt parallel zur Fahrtrichtung. An ihren dem Halterahmen 68 gegenüberliegenden Enden sind die ersten und zweiten Führungsglieder 61, 62 gelenkig mit einem Stützglied 64 verbunden, welches an dessen Unterseite wiederum gelenkig mit einem Fußstück 65 verbunden ist. Das Fußstück 65 besitzt eine Auflagefläche (Unterseite), die im abgestützten Zustand dem Boden kontaktiert. Sämtliche Gelenkachsen des Stützfußes 60 verlaufen parallel zueinander.

Ein Aktuator in Form eines Hydraulikzylinders 67 ist gelenkig mit dem Halterahmen 68 und mit dem ersten Führungsglied 61 gekoppelt. Das entsprechende Gelenk am ersten Führungsglied 61 befindet sich an einem verbreiterten bzw. "bauchigen" Abschnitt des ersten Führungsglieds 61. Die drei Gelenke des ersten Führungsglieds 61 bilden die Ecken eines Dreiecks. Um den Stützfuß 60 von der in der Figur 3a gezeigten Parkstellung in die zweite Stützstellung (Fig. 3b) zu bewegen, wird der Hydraulikzylinder 67 ausgefahren, sodass die ersten und zweiten Führungsglieder 61, 62 um ihre jeweiligen Gelenke am Halterahmen 68 nach unten verschwenken. Dadurch bewegt sich das Stützglied 64 abwärts, wobei sich die Ausrichtung des Stützglieds 64, die vorzugsweise im Wesentlichen vertikal ist, kaum verändert. Dadurch senkt sich das Fußstück 65 ab. Befindet sich das Zweiwegefahrzeug 10 in der zweiten Fahrstellung, so kontaktiert das Fußstück 65 in der zweiten Stützstellung den Boden 3 neben den Schienen 1.

Um den Stützfuß 60 weiter in die dritte Stützstellung (Fig. 3c) zu bewegen, wird der Hydraulikzylinder 67 weiter ausgefahren, sodass die ersten und zweiten Führungsglieder 61, 62 um ihre jeweiligen Gelenke am Halterahmen 68 weiter nach unten verschwenken und sich das Stützglied 64 weiter abwärts bewegt, vorzugsweise weiterhin ohne dabei kaum dessen Ausrichtung zu verändern. Befindet sich das Zweiwegefahrzeug 10 in der dritten Fahrstellung, so kontaktiert das Fußstück 65 in der dritten Stützstellung den Boden 3 neben den Schienen 1.

Vorzugsweise umfasst der Stützfuß 60 zusätzlich ein drittes Führungsglied 63, wie dies bei dem Ausführungsbeispiel der Figuren 3a-c gezeigt ist. Dieses kann als Teleskopstange ausgebildet sein, welche gelenkig mit dem Halterahmen 68 und mit dem Fußstück 65 im Bereich von dessen Gelenk verbunden ist. Bei der Bewegung zwischen der zweiten und der dritten Stützstellung teleskopiert das dritte Führungsglied 63 passiv mit ein bzw. aus. Wird der Stützfuß 60 in die Parkstellung bewegt (Fig. 3a), so teleskopiert das dritte Führungsglied 63 vor Erreichen der Endstellung vollständig ein, sodass es das gelenkig am Stützglied 64 gelagerte Fußstück 64 automatisch in eine Einklappstellung verschwenkt, in welcher der Auflagebereich zum Halterahmen 68 zeigt (vgl. Fig. 3a).

Neben der gezeigten Parkstellung (Fig. 3a) und den gezeigten zweiten und dritten Stützstellungen (Fig. 3b-c) besitzt der Stützfuß 60 vorzugsweise eine weitere Stützstellung für den Straßenbetrieb (diese wird nachfolgend als erste Stützstellung bezeichnet), in der das Zweiwegefahrzeug 10 in der ersten Fahrstellung (in der es über die Räder auf dem Boden 3 aufsitzt und nicht auf Schienen 1 gelagert ist) abgestützt werden kann (dabei kann die Parkstellung ebenfalls als eine Stützstellung betrachtet werden, obwohl hier keine Abstützung erfolgt).

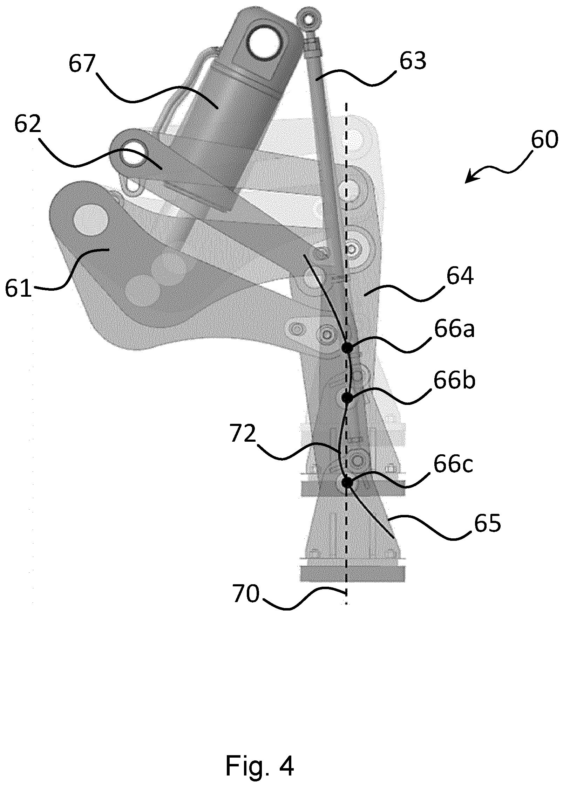

Die Figur 4 zeigt eine Überlagerung der ersten bis dritten Stützstellungen des Stützfußes 60. Hierbei ist zu erkennen, dass das Gelenk zwischen Stützglied 64 und Fußstück 65, welches einen definierten Punkt 66 des Fußstücks 65 repräsentiert, in den drei Stützstellungen auf einer gedachten vertikalen Linie 70 liegt. In der Figur 4 bezeichnet das Bezugszeichen 66a den definierten Punkt 66 in der ersten Stützstellung, das Bezugszeichen 66b den definierten Punkt 66 in der zweiten Stützstellung und das Bezugszeichen 66c den definierten Punkt 66 in der dritten Stützstellung. Dies bedeutet, dass der Stützfuß 60 und insbesondere das Fußstück 65 in den drei Stützstellungen denselben Abstand vom Mittelstück 14 besitzt (drei Punkte gleicher Abstützweite). Dadurch ergibt sich in allen Stützstellungen ein identisches Abstützverhalten für den Bediener und somit ein gleiches Kippverhalten des Zweiwegefahrzeugs 10.

Der definierte Punkt 66 durchläuft bei dem Ausführungsbeispiel der Figur 4 eine S-förmige Bewegungsbahn 72, welche im Bewegungsbereich zwischen den genannten Stützstellungen seitlich kaum von der gedachten vertikalen Linie 70 abweicht und insbesondere innerhalb der Außenkontur des Stützglieds 64 verbleibt. Dadurch hat der Stützfuß 60 beim Ein- und Ausklappen nur einen geringen seitlichen Platzbedarf, sodass eine Bewegung des Stützfußes 60 auch in beengten Bereichen wie beispielsweise im Bahnsteigbereich vorgenommen werden kann. Darüber hinaus ist die Abstützvorrichtung auch bei einem Schmalspureinsatz des Zweiwegefahrzeugs 10 in allen Fahrstellungen nutzbar. Die Stützfüße 60 sind dabei insbesondere so kompakt aufgebaut, dass sie unter- und innerhalb der obersten Trittstufe eines Aufstiegs eingeklappt werden können.

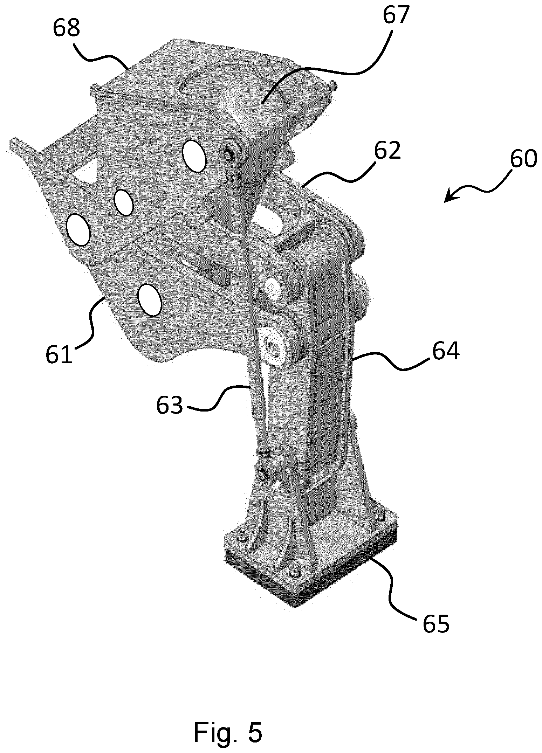

Die Figur 5 zeigt eine perspektivische Ansicht des Stützbeins 60 gemäß dem Ausführungsbeispiel der Figuren 3a-c in der zweiten Stützstellung. Es ist zu erkennen, dass die ersten und zweiten Führungsglieder 61, 62 Rahmenstrukturen mit zwei über die jeweiligen Gelenke verbundenen Seitenprofilen darstellen können, wobei das Stützglied 64 eine zwischen den Seitenprofilen der ersten und zweiten Führungsglieder 61, 62 angeordnete Kastenkonstruktion darstellen kann. Der Aktuator 67 kann zwischen den Seitenprofilen der ersten und zweiten Führungsglieder 61, 62 sitzen.

### Bezugszeichenliste:

- 1: Schiene
- 2: Verwindung
- 3: Boden
- 10: Zweiwegefahrzeug
- 12: Unterwagen
- 14: Mittelstück
- 16: Rad
- 20: Schienenachse
- 21: Schienenrad
- 22: Aktuator
- 30: Endstück
- 31: Erstes Rahmenteil
- 32: Zweites Rahmenteil
- 34: Schwenkachse
- 40: Pendelachse
- 41: Drehlager
- 50: Lageranordnung
- 60: Stützfuß
- 61: Erstes Führungsglied
- 62: Zweites Führungsglied
- 63: Drittes Führungsglied
- 64: Stützglied
- 65: Fußstück
- 66: Definierter Punkt des Fußstücks
- 66a: Definierter Punkt des Fußstücks in der ersten Stützstellung
- 66b: Definierter Punkt des Fußstücks in der zweiten Stützstellung
- 66c: Definierter Punkt des Fußstücks in der dritten Stützstellung
- 67: Aktuator
- 68: Halterahmen
- 70: Vertikale Linie
- 72: Bewegungsbahn

## Patentansprüche

1. Zweiwegefahrzeug (10), insbesondere Zweiwegebagger, mit einem Unterwagen (12), welcher ein Radfahrwerk mit mindestens zwei Radachsen für die Straßenfahrt und ein Schienenfahrwerk mit einer vorderen und einer hinteren Schienenachse (20) für die Schienenfahrt umfasst, wobei der Unterwagen (12) ein Mittelstück (14) umfasst, an welchem die Radachsen angeordnet sind, wobei die Schienenachsen (20) relativ zum Mittelstück (14) zwischen einer ersten Fahrstellung für die Straßenfahrt, einer zweiten Fahrstellung, in der das Zweiwegefahrzeug (10) über die Schienenachsen (20) auf Schienen (1) geführt und über die Radachsen antreibbar ist, und einer dritten Fahrstellung, in der das Zweiwegefahrzeug (10) nur über die Schienenachsen (20) auf Schienen (1) aufsitzt und antreibbar ist, bewegbar sind,
**gekennzeichnet durch**
eine Abstützvorrichtung mit mindestens zwei am Mittelstück (14) angeordneten Stützfüßen (60), welche jeweils zwischen einer ersten Stützstellung, einer zweiten Stützstellung zum Abstützen des Zweiwegefahrzeugs (10) in der zweiten Fahrstellung und einer dritten Stützstellung zum Abstützen des Zweiwegefahrzeugs (10) in der dritten Fahrstellung bewegbar sind, wobei die Stützfüße (60) jeweils ein Stützglied (64) mit einem Fußstück (65), ein gelenkig mit dem Stützglied (64) und dem Mittelstück (14) gekoppeltes erstes Führungsglied (61) und ein gelenkig mit dem Stützglied (64) und dem Mittelstück (14) gekoppeltes zweites Führungsglied (62) umfassen, welche so angeordnet und ausgebildet sind, dass ein definierter Punkt (66) des Fußstücks (65) in den zweiten und dritten Stützstellungen, vorzugsweise in den ersten, zweiten und dritten Stützstellungen, denselben seitlichen Abstand vom Mittelstück (14) einnimmt.

2. Zweiwegefahrzeug (10) nach Anspruch 1, wobei das Fußstück (65) gelenkig mit dem Stützglied (64) verbunden ist, wobei vorzugsweise das Drehgelenk zwischen Fußstück (65) und Stützfuß (64) den definierten Punkt (66) des Fußstücks (65) bildet.

3. Zweiwegefahrzeug (10) nach Anspruch 1 oder 2, wobei das erste Führungsglied (61) ein Dreigelenkglied und das zweite Führungsglied (62) ein Zweigelenkglied bildet, wobei das erste Führungsglied (61) vorzugsweise in Fahrtrichtung gesehen eine im Wesentlichen dreieckige Form besitzt.

4. Zweiwegefahrzeug (10) nach einem der vorhergehenden Ansprüche, wobei das erste Führungsglied (61) unterhalb des zweiten Führungsglieds (62) angeordnet ist und/oder unabhängig von der Stützstellung im Wesentlichen parallel zum zweiten Führungsglied (62) verläuft.

5. Zweiwegefahrzeug (10) nach einem der vorhergehenden Ansprüche, wobei jeder Stützfuß (60) einen insbesondere als Hydraulikzylinder ausgebildeten Aktuator (67) umfasst, mittels welchem der Stützfuß (60) aktiv zwischen den Stützstellungen bewegbar ist, wobei die Stützfüße (60) über die Aktuatoren (67) vorzugsweise unabhängig voneinander bewegbar sind.

6. Zweiwegefahrzeug (10) nach dem vorhergehenden Anspruch, wobei der Aktuator (67) gelenkig mit dem Mittelstück (14) und mit dem ersten Führungsglied (61) verbunden ist und vorzugsweise keine direkte Verbindung zum zweiten Führungsglied (62) und zum Stützglied (64) besitzt.

7. Zweiwegefahrzeug (10) nach einem der vorhergehenden Ansprüche, wobei jeder Stützfuß (60) einen Halterahmen (68) umfasst, welcher mit dem Mittelstück (14) verbunden ist, wobei die ersten und zweiten Führungsglieder (61, 62) gelenkig mit dem Halterahmen (68) gekoppelt sind, wobei die Halterahmen (68) vorzugsweise seitlich am Mittelstück (14) befestigt oder ausgebildet sind.

8. Zweiwegefahrzeug (10) nach dem vorhergehenden Anspruch und nach einem der Ansprüche 5 bis 6, wobei der Aktuator (67) als Hydraulikzylinder ausgebildet und gelenkig mit dem Halterahmen (68) verbunden ist, wobei eine gedachte, die Gelenkstellen der ersten und zweiten Führungsglieder (61, 62) am Halterahmen (68) verbindende Verbindungsgerade vorzugsweise in jeder Stützstellung einen Winkel von weniger als 45°, insbesondere weniger als 30° zur Längsachse des Hydraulikzylinders (66) einnimmt.

9. Zweiwegefahrzeug (10) nach einem der vorhergehenden Ansprüche, wobei die ersten und zweiten Führungsglieder (61, 62) und das Stützglied (64) so ausgebildet sind, dass der definierte Punkt (66) des Fußstücks (65) in den zweiten und dritten Stützstellungen, insbesondere in den ersten, zweiten und dritten Stützstellungen, auf einer gemeinsamen vertikalen Linie (70) liegt.

10. Zweiwegefahrzeug (10) nach einem der vorhergehenden Ansprüche, wobei die ersten und zweiten Führungsglieder (61, 62) und das Stützglied (64) so ausgebildet sind, dass der definierte Punkt (66) des Fußstücks (65) bei einer Bewegung des Stützfußes (60) von der ersten in die dritte Stützstellung in Fahrtrichtung gesehen eine S-förmige Bewegungsbahn (72) beschreibt, welche vorzugsweise innerhalb der gedachten Außenkontur des in der dritten Stützstellung befindlichen Stützglieds (64) verläuft.

11. Zweiwegefahrzeug (10) nach einem der vorhergehenden Ansprüche, wobei jeder Stützfuß (60) ein drittes Führungsglied (63) umfasst, welches das Fußstück (65) gelenkig mit dem Mittelstück (14) oder einem am Mittelstück (14) befestigten Halterahmen (68) koppelt und das Fußstück (65) in einer Parkstellung des Stützfußes (60), in welcher das Fußstück (65) keinen Kontakt zum Boden (3) hat, in eine verschwenkte Einklappstellung drückt, wobei das dritte Führungsglied (63) vorzugsweise als Teleskopstange ausgebildet ist.

12. Zweiwegefahrzeug (10) nach einem der vorhergehenden Ansprüche, wobei die Abstützvorrichtung genau zwei Stützfüße (60) umfasst, welche vorzugsweise mittig am Mittelstück (14) zwischen zwei Radachsen angeordnet sind, oder wobei die Abstützvorrichtung vier Stützfüße (60) umfasst, welche vorzugsweise paarweise seitlich an stirnseitigen Endabschnitten des Mittelstücks (14) zwischen einer Radachse und einer Schienenachse (20) angeordnet sind.

13. Zweiwegefahrzeug (10) nach einem der vorhergehenden Ansprüche, wobei das Schienenfahrwerk ein vorderes und ein hinteres Endstück (30) umfasst, welche jeweils eine der Schienenachsen (20) tragen und um eine parallel zu einer Längsachse des Unterwagens (12) verlaufende Pendelachse (40) drehbar am Mittelstück (14) gelagert sind, um Unebenheiten bei der Schienenfahrt durch eine Pendelbewegung der Schienenachse (20) auszugleichen, wobei die Pendelachsen (40) der Endstücke (30) vorzugsweise unabhängig von der Fahrstellung parallel, insbesondere koaxial zueinander verlaufen.

14. Zweiwegefahrzeug (10) nach dem vorhergehenden Anspruch, wobei jedes Endstück (30) ein erstes und ein zweites Rahmenteil (31, 32) umfasst, wobei die Schienenachse (20) jeweils am ersten Rahmenteil (31) gelagert ist und das zweite Rahmenteil (32) jeweils um die Pendelachse (40) drehbar mit dem Mittelstück (14) verbunden ist, wobei die Rahmenteile (31, 32) beweglich, insbesondere schwenkbar, miteinander verbunden sind.

15. Abstützvorrichtung für ein Zweiwegefahrzeug nach einem der vorhergehenden Ansprüche, wobei die Stützfüße (60) vorzugsweise nach den Merkmalen des Anspruchs 7 weitergebildet sind und die Halterahmen (68) als Anbaukonsolen mit Verbindungselementen ausgestaltet sind, über die sie am Unterwagen (12) des Zweiwegefahrzeugs (10) montierbar sind.
